# EUROPÄISCHE PATENTSCHRIFT

(11) **EP 1 476 664 B1**
(45) Veröffentlichungstag und Bekanntmachung des Hinweises auf die Patenterteilung: **21.03.2007**
(21) Anmeldenummer: 03708019.9
(22) Anmeldetag: 07.02.2003
(51) Int. Cl.: F15B 13/04

(54) **VERFAHREN ZUR HERSTELLUNG EINES DRUCKROHRES EINES HUBMAGNETEN**
METHODS FOR THE PRODUCTION OF A PRESSURE PIPE OF AN ELECTRIC STROKINGB MAGNET
PROCEDE DE PRODUCTION D'UN TUBE SOUS PRESSION D'UN ELECTRO-AIMANT DE COURSE

(30) Priorität: 22.02.2002 DE 10207438; 18.09.2002 DE 10243165
(43) Veröffentlichungstag der Anmeldung: 17.11.2004
(73) Patentinhaber: ROBERT BOSCH GMBH, 70442 Stuttgart (DE)
(72) Erfinder: SCHEMPP, Roland, 71665 Vaihingen (DE); BAERENWALDT, Uwe, 71691 Freiberg (DE); SANZENBACHER, Hermann, 71701 Schwieberdingen (DE)
(74) Vertreter: Thürer, Andreas
(86) Internationale Anmeldenummer: PCT/DE2003/000351
(87) Internationale Veröffentlichungsnummer: WO 2003/072954

(56) Entgegenhaltungen:
- EP-A- 1 118 518
- WO-A-98/40260
- DE-A- 10 008 958
- US-A- 4 004 343
- US-A- 4 553 735
- US-B1- 6 217 001

## Beschreibung

Die Erfindung betrifft ein Verfahren zur Herstellung eines Druckrohres eines Hubmagneten für ein hydraulisches Ventil nach dem Oberbegriff des Patentanspruchs 1.

Aus der DE 197 07 587 A1 ist ein Druckrohr bekannt, das Bestandteil eines druckdichten Hubmagneten ist, der neben dem Druckrohr eine Spule zur Betätigung eines in einem Aufnahmeraum des Druckrohrs axial beweglich geführten Ankers umfaßt, wobei die Spule das Druckrohr umgibt. Das Druckrohr umfaßt ein Polstück, welches über ein Zentralgewinde mit einem Ventilkörper verschraubbar ist, ein unmagnetisches Zwischenstück und ein sich an dieses anschließendes Rohrstück, welches an der dem Polstück abgewandten Seite stirnseitig mittels eines als Hubbegrenzung dienenden Bauteils verschlossen ist. Das Polstück, das Zwischenstück, das Rohrstück und die Hubbegrenzung begrenzen den Aufnahmeraum für den mit der Spule zusammenwirkenden Anker. Der Anker ist mit einem Stößel verbunden, der das Polstück in axialer Richtung durchgreift und zur Betätigung eines Ventilschiebers des hydraulischen Ventils dient. Das unmagnetische Zwischenstück dient zur Umleitung des magnetischen Flusses in den Anker.

Gängige Verfahren für die Einbringung des unmagnetischen Zwischenstücks zwischen das Polstück und das Rohrstück sind das Bronze-Auftragsschweißen oder das Einlöten von austenitischem Stahl. Beim Einsatz derartiger Verfahren ist es, um eine Lauffläche für den Anker herzustellen, erforderlich, daß das Druckrohr an der den Aufnahmeraum begrenzenden Innenwandung nach einem spanabhebenden Verfahren nachbearbeitet wird. Dies ist insofern nachteilig, als durch das spanabhebende Verfahren nicht nur die Herstellungsdauer, sondern auch die Fertigungskosten steigen.

In der US-A-4 553 735 ist erwähnt, dass Polstück, Zwischenstück und Rohrstück durch Hartlöten, Kleben, Reibungs- oder Widerstandsschweißen miteinander verbunden werden können. In der WO 98/40260 A1 wird ebenfalls auf Hartlöten und Reibungsschweißen und zusätzlich auf Laserschweißen als mögliche Verfahren zur Verbindung von Polstück, Zwischenstück und Rohrstück eines Druckrohres eines Hubmagneten hingewiesen. Gemäß der DE 100 08 958 A1 werden ein Flachanker und ein Stößel eines Hubmagneten durch Reibungsschweißen, Laserschweißen, Elektronenstrahlschweißen oder Kondensatorentladungsschweißen miteinander verbunden.

Ferner ist es auch bekannt, das unmagnetische Zwischenstück bzw. die unmagnetische Zone durch partielle Gefügeumwandlung des das Druckrohr bildenden Werkstücks herzustellen. Nachteilig dabei ist jedoch, daß zum einen ein großer vorrichtungstechnischer Aufbau zum Gefügeumwandeln notwendig ist, als auch eine sehr sensible Ansteuerung der Gefügeumwandlungsvorrichtung zu erfolgen hat, um ein Zwischenstück mit den gewünschten Gefüge auszubilden.

Bei den vorgenannten Verfahren zur Herstellung der unmagnetischen Zone eines Druckrohres werden der Anker sowie sonstige in dem Aufnahmeraum angeordnete Bauteile, wie Antiklebscheiben und der Stößel, aufgrund der herrschenden Temperaturen erst nach dem Zusammenfügen und dem Nachbearbeiten des Verbindungsbereichs zwischen dem Polstück und dem Zwischenstück bzw. dem Zwischenstück und dem Rohrstück in den Aufnahmeraum eingebracht. Erst dann wird der Aufnahmeraum mittels der Hubbegrenzung verschlossen. Dabei erfolgt das Verschließen üblicherweise nach einem Bördelverfahren.

Ein Nachteil des Verfahrens ist, daß die Hubbegrenzung über ein Bördelverfahren mit dem Druckrohr gefügt wird. Durch die auftretenden Druckwechsel im Aufnahmeraum verändert sich die Lage der Hubbegrenzung, so daß kein druckfester und dichter Betrieb und kein fester Sitz mehr gewährleistet sind. Dies beruht vor allem auf einer Abnutzung der Kanten innerhalb der Einrollung bei jedem Druckwechsel.

Dabei ist eine Lageänderung der Hubbegrenzung besonders bei Druckrohren mit integrierter Wegmesseinrichtung zur Messung eines Schieberweges von Nachteil, da durch die Lageänderung der Nullpunkt verschoben wird und somit die Messergebnisse verfälscht werden.

Ein anderer Nachteil des Verfahrens ist, daß die Hubbegrenzung von dem Druckrohr körperlich getrennt ist, so daß stets über einen Fügeschritt diese beiden Bauteile gefügt werden müssen.

Aufgabe der vorliegenden Erfindung ist es, ein Verfahren zu schaffen, das die vorgenannten Nachteil beseitigt.

Diese Aufgabe wird gelöst durch ein Verfahren mit den Merkmalen nach dem Patentanspruch 1.

Bei dem erfindungsgemäßen Verfahren zur Herstellung eines Druckrohres eines Hubmagneten für ein hydraulisches Ventil wird der Anker vor dem Verfügen des Polstücks, des unmagnetischen Zwischenstücks und des Rohrstücks in den Aufnahmeraum eingebracht. Dies gilt natürlich auch für weitere, in dem Aufnahmeraum anzuordnende Bauteile, wie z. B. Antiklebscheiben, sowie für einen mit dem Anker verbundenen Stößel. Durch Einsatz eines thermischen Verfahrens, wie dem Kondensatorentladungsschweißen (KSE), bei dem nur eine enge Zone in den zu verbindenden Bauteilen erwärmt wird, ist es möglich, den Anker vor dem Verfügen in den Aufnahmeraum einzubringen. Es nicht mehr erforderlich ist, die Wandungen des Aufnahmebereichs für den Anker mittels aufwendiger spanabhebender Verfahren nachzubearbeiten, da die Verbindung zwischen dem Zwischenstück und dem Rohrstück bzw. dem Polstück und dem Zwischenstück ausschließlich über die jeweils aneinander grenzenden Stirnseiten der jeweiligen Bauteile erfolgt. Dadurch ist eine Lauffläche für den Anker bereitgestellt. Entsprechend' ist es auch nicht mehr erforderlich, das Druckrohr am äußeren Umfang spanabhebend nachzubearbeiten bzw. abzudrehen, da auch hier nach dem Verbinden der Einzelteile keine Materialrückstände vorhanden sind.

Nach einer vorteilhaften Ausführungsform des Verfahrens nach der Erfindung wird das Zwischenstück mit dem Polstück und dem Rohrstück verschweißt, und zwar vorzugsweise nach einem Kondensatorentladungsschweißverfahren. Beim Kondensatorentladungsschweißen können die Bauteile ohne Ausglühen und Verzug miteinander verbunden werden. Die Bauteile behalten auch nach dem Schweißprozeß ihre Maßgenauigkeit. Die genaue Positionierung der Bauteile zueinander bleibt erhalten. Auch ist es bei diesem Schweißverfahren möglich, unterschiedliche Werkstoffe miteinander zu verbinden.

Durch Einsatz des Kondensatorentladungsschweißens ist es erfindungsgemäß ebenfalls möglich, die Hubbegrenzung mit dem Rohrstück thermisch zu verbinden, so daß auf herkömmliche Bördelverfahren verzichtet werden kann.

Durch den Einsatz des Kondensatorentladungsschweißens wird eine ortsfeste Verbindung zwischen dem Rohrstück und der Hubbegrenzung geschaffen, so daß ein Verrutschen der Hubbegrenzung im Betrieb verhindert ist. Des Weiteren ist die Schweißverbindung zwischen dem Rohrstück und der Hubbegrenzung nicht nur druckfest, sondern auch dicht, so daß auf O-Ringe oder sonstige Dichthilfsmittel verzichtet werden kann. Da ferner beim Kondensatorentladungsschweißen keine wie vom Löten oder Laserschweißen notwendigen Reinheiten erforderlich sind, ist der Prozeß schnell und kostengünstig durchführbar.

Durch Einsatz des Verfahrens nach der Erfindung ist es möglich, die Hubbegrenzung und das Rohrstück einstückig zu fertigen. Dadurch können wiederum alle Bauteile des Hubmagneten, d. h. das Polstück, das unmagnetische Zwischenstück, das Rohrstück mit der Hubbegrenzung, der Anker, der Stößel, die Antiklebscheiben, etc., zusammengesetzt bzw. montiert werden und dann in einem einzigen Arbeitsgang thermisch zusammengefügt werden. Eine Nachbearbeitung ist nicht erforderlich. Vielmehr ist ein fertiges Druckrohr bereitgestellt, das mit einer Spule und einem Gehäuse eines hydraulischen Ventils verbunden werden kann.

Bei einem anderen Verfahren, das vorzusgweise bei einem Druckrohr Anwendung findet, bei dem die Hubbegrenzung einstückig mit dem Rohrstück gefertigt ist, werden beim Zusammenfügen des Druckrohrs in einer Aufnahmevorrichtung einer Kondensatorentladungsschweißvorrichtung die zusammengesetzten Einzelteile am Rohraußendurchmesser fixiert und so zentriert. Die Hubbegrenzung ist dabei zweckmäßig unten angeordnet, so daß das Polstück, das Zwischenstück und das Rohrstück vertikal ausgerichtet sind. Damit liegt der Anker schwerkraftbedingt an der Auflagefläche der Hubbegrenzung und damit gegebenenfalls an einer Auflagefläche eines von der Hubbegrenzung aufgenommenen Handnotbolzens auf. Dadurch stellt sich ein Abstand des Ankers zur Schweißstelle ein, welche im Bereich des eine unmagnetische. Zone bildenden Zwischenstücks des Druckrohrs ausgebildet ist. Durch den sich so einstellenden Abstand zwischen dem Anker und der Schweißstelle fließt der beim Kondensatorentladungsschweißen abfließende Strom nicht über den Anker, sondern über die zu verschweißenden Stellen in der unmagnetischen Zone und in die Hubbegrenzung, ohne daß der Anker einen Stromkurzschluß bildet.

Weitere Vorteile und vorteilhafte Ausgestaltungen des Gegenstandes nach der Erfindung sind der Beschreibung, der Zeichnung und den Patentansprüchen entnehmbar.

Im Folgenden erfolgt eine ausführliche Beschreibung der Erfindung anhand schematischer Darstellungen. Es zeigen
Figur 1 ein hydraulisches Ventil mit einem herkömmlichen Druckrohr eines Hubmagneten,
Figur 2 ein Druckrohr mit einem einstückig ausgebildeten Rohrstück und einer Hubbegrenzung,
Figur 3 ein Druckrohr mit einer in dem Rohrstück thermisch gefügten Hubbegrenzung und
Figur 4 eine Detailansicht eines Verbindungsbereichs des Rohrstücks mit der Hubbegrenzung aus Figur 3.

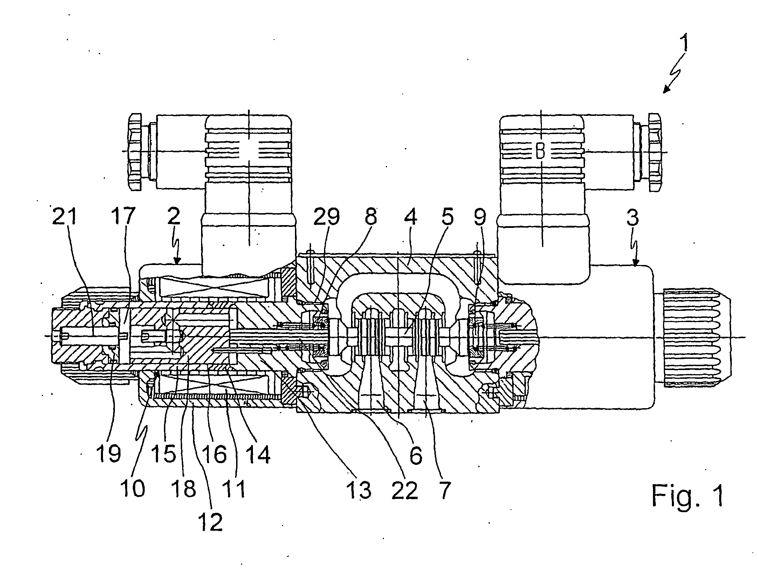

In Figur 1 ist ein hydraulisches Wegeventil 1 im Längsschnitt dargestellt, das für industrielle Anwendungen ausgelegt, in Schieberbauweise ausgeführt und direkt gesteuert ist. Zur Betätigung weist das Wegeventil 1 zwei druckdicht ausgeführte Hubmagnetanordnungen 2 und 3 auf, die elektrisch ansteuerbar sind.

Das hydraulische Wegeventil 1 ist mit einem Ventilgehäuse 4 ausgebildet, in dem ein Steuerschieber 5 axial beweglich angeordnet ist, mittels dessen ein Fluidstrom in dem Wegeventil 1 steuerbar ist. In der Zeichnung sind ein erster Ventilanschluß 6 und ein zweiter Ventilanschluß 7 dargestellt.

Der Steuerschieber 5 ist mittels zweier Rückstelleinrichtungen 8 und 9 in der in Fig. 1 dargestellten sogenannten Mittelstellung zentriert gehalten und nach beiden Seiten in sogenannte Arbeitsstellungen auslenkbar, und zwar mittels der in axialer Richtung beidseits des Ventilgehäuses 4 angeordneten Hubmagnetanordnungen 2 und 3.

Die Hubmagnetanordnungen 2 und 3 sind bei der gezeigten Ausführungsform baugleich. Aus diesem Grunde wird in der nachfolgenden Beschreibung nur auf die Hubmagnetanordnung 2 Bezug genommen.

Die Hubmagnetanordnung 2 ist als einfach wirkender Hubmagnet in druckdichter Bauweise ausgeführt und umfaßt ein Druckrohr 10, das koaxial zu dem Steuerschieber 5 ausgerichtet ist und auf dem eine Magnetspule 11 angeordnet ist, die von einem Spulengehäuse 12 begrenzt ist.

Das Druckrohr 10 umfaßt ein hülsenförmiges Polstück 13, an dem ein Zentralgewinde 29 ausgebildet ist, über das das Druckrohr 10 mit dem Ventilgehäuse 4 verschraubt ist. An dem dem Ventilgehäuse 4 abgewandten Ende grenzt an das Polstück 13 ein unmagnetisches Zwischenstück 14, an welches wiederum ein Rohrstück 15 grenzt. Das Polstück 13, das Zwischenstück 14 und das Rohrstück 15 bilden eine Lauffläche 16 für einen in einem Aufnahmeraum 17 des Druckrohrs 10 angeordneten Anker 18, der mit der Magnetspule zusammenwirkt und axial beweglich ausgeführt ist.

Der Anker 18 ist mit einem Stößel 22 verbunden, der das Polstück 13 axial durchgreift und zur Betätigung des Ventilschiebers 5 dient.

An dem dem Ventilgehäuse 4 abgewandten Ende ist der Aufnahmeraum 17 mittels einer Hubbegrenzung 19 verschlossen, die mit dem Rohrstück 15 verbunden ist. Die deckelartige Hubbegrenzung 19 weist des weiteren einen Handnotbolzen 21 auf, mittels dem der Anker 18 im Bedarfsfall von Hand und von außen in dem Aufnahmeraum 17 axial verschiebbar ist, so daß der Steuerschieber 5 des Ventils 1 betätigt wird.

Bei dem Druckrohr 10 besteht das unmagnetische Zwischenstück 14 aus Bronze, die zwischen dem Polstück 13 und dem Rohrstück 15 aufgeschweißt ist.

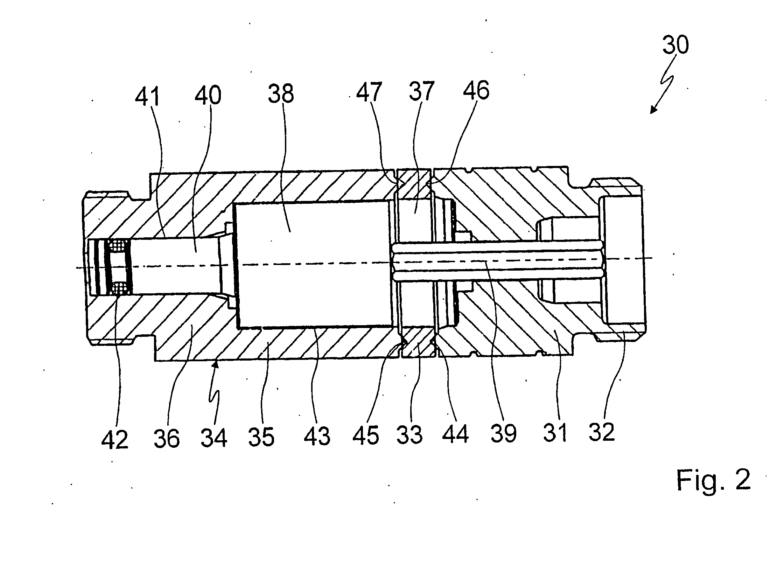

In Figur 2 ist ein Druckrohr 30 mit einem Rohrstück 35 mit einer integrierten Hubbegrenzung 36 dargestellt, das zum Einbau in ein hydraulisches Ventil der in Figur 1 dargestellten Art dient und mithin Bestandteil einer Hubmagnetanordnung ist.

Das Druckrohr 30 besteht aus einem Polstück 31, an dem ein Zentralgewinde 32 ausgebildet ist, über das das Druckrohr 30 mit einem Ventilgehäuse verbindbar ist.

An dem dem Zentralgewinde 32 abgewandten Ende grenzt an das Polstück 31 ein unmagnetisches Zwischenstück 33, das ringförmig ausgebildet ist und an das an der dem Polstück 31 abgewandten Stirnseite ein becherförmiges Bauteil 34 angrenzt, welches aus einem hohlzylindrischen Rohrstück 35 und einem eine Hubbegrenzung bildenden Teilbereich 36 besteht. Das Polstück. 31, das Zwischenstück 33 und das becherförmige Bauteil 34 begrenzen einen Aufnahmeraum 37 für einen Anker 38, der mit einer in Figur 2 nicht dargestellten Magnetspule zusammenwirkt.

Der Anker 38 steht mit einem Stößel 39 in Verbindung, der das Polstück 31 axial durchgreift und zur Betätigung des Steuerschiebers des hydraulischen Ventils dient.

Des weiteren ist in dem becherförmigen Bauteil 34 ein Handnotbolzen 40 angeordnet, der in einer Bohrung 41 axial beweglich geführt ist, an seinem Umfang mittels eines 0-Rings 42 gedichtet ist und in der in Figur 2 dargestellten Stellung des Ankers 38 an diesen stirnseitig angrenzt.

Das unmagnetische Zwischenstück 33 ist an seinen Stirnseiten einerseits mit dem Polstück 31 und andererseits mit dem becherförmigen Bauteil 34 nach einem Kondensatorentlädungsschweißverfahren thermisch verfügt, daß eine Lauffläche 43 für den Anker 38 gebildet ist. Beim Verfügen der Bauteile erfolgt ein Energieeintrag, der zu einer umlaufenden Schweißverbindung zwischen den jeweiligen Bauteilen führt. Die Bauteile werden dabei derart in einer Justiervorrichtung positioniert, daß die zylindrischen Innenflächen des Rohrstücks 35 und des Zwischenstücks 33 genau fluchten. Nach dem Verfügen ist keine Nachbearbeitung der Lauffläche 43 erforderlich.

Die Lauffläche 43 umfaßt die innere Zylinderfläche des rohrförmigen Teilbereichs 35 des Bauteils 34 und die innere Zylinderfläche des Zwischenstücks 33. Das Polstück 31, das Zwischenstück 33 und das becherförmige Bauteil 35 sind, nachdem der Anker 38. in den Aufnahmeraum 37 eingesetzt wurde bzw. das Druckrohr komplett zusammengesetzt und fixiert wurde, miteinander verbunden.

Um beim Verfügen eine genaue Zentrierung der einzelnen Bauteile zueinander zu gewährleisten, ist an den Stirnseiten des ringförmigen Zwischenstücks 33 jeweils eine Ringnut 44 bzw. 45 ausgebildet, in welche ein Ringwulst 46 bzw. 47 an der korrespondierenden Stirnseite des Polstücks 31 bzw. des becherförmigen Bauteils 35 eingreift. Alternativ kann die Zentrierung der einzelnen Bauteile mittels der eingesetzten Schweißvorrichtung erfolgen.

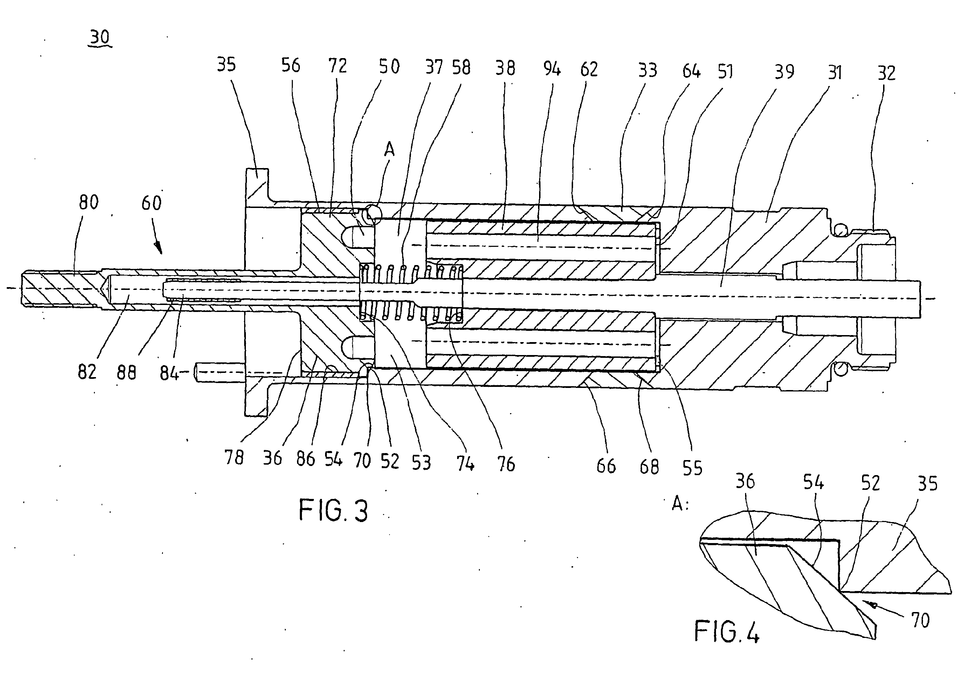

Figur 3 zeigt ein Druckrohr 30 mit einer in einem Rohrstück 35 thermisch gefügten Hubbegrenzung 36 und mit einer integrierten Wegmesseinrichtung 60 zur Bestimmung der Schieberposition.

Wie in der vorhergehenden Ausführungsform nach Figur 2, weist das Druckrohr 30 ein Rohrstück 35, ein unmagnetisches Zwischenstück 33, ein Polstück 31 mit einem Zentralgewinde zur Befestigung des Druckrohres 30 in einem Ventilgehäuse (nicht dargestellt) und eine Hubbegrenzung 36 auf.

Das Zwischenstück 33 ist stirnseitig zwischen dem Rohrstück 35 und dem Polstück 31 angeordnet und mit diesen verbunden, so daß ein Aufnahmeraum 37 zur Aufnahme eines Ankers 38 geschaffen ist. Der Anker 38 unterteilt den Aufnahmeraum 37 in zwei Unterräume 51, 53, die über im Anker 38 ausgebildete Durchgangsbohrungen 94 in Verbindung stehen. Zur Vereinfachung der Fertigung , sind die Stirnflächen 62, 64 des Zwischenstücks 33 entgegengesetzt konisch und die gegenüberliegenden Stirnflächen 66, 68 des Rohrstücks 35 und des Polstücks 31 mit korrespondierenden Gegenkonturen ausgebildet.

Der Aufnahmeraum 37 ist axial durch das Polstück 31 und die Hubbegrenzung 36 begrenzt. In dem Aufnahmeraum ist der auf einem Stößel 39 gelagerte Anker 38 über eine Feder 58, die sich an der Hubbegrenzung 36 abstützt, gegen einen stirnseitigen Anlagering 55 des Polstücks 31 in Grundposition vorgespannt. Zur Lagesicherung taucht die Feder 58 in stirnseitige Vertiefungen 74 und 76 der Hubbegrenzung 36 und des Ankers 38 ein.

Im Gegensatz zur vorbeschriebenen Ausführungsform ist die Hubbegrenzung 36 jedoch nicht einstückig mit dem Rohrstück 35 ausgebildet, sondern in das Rohrstück 35 eingesetzt und mit diesem thermisch gefügt. Vorzugsweise besteht das Rohrstück 35 aus einem weichen magnetischen Stahl, wohingegen die Hubbegrenzung 36 aus einem nicht magnetisierbaren austenitischen Stahl ist.

Das Rohrstück 35 ist im Bereich der Hubbegrenzung 36 radial erweitert, wodurch eine Umfangskante 52 gebildet wird (Figur 4). An dieser Umfangskante 52 liegt die Hubbegrenzung 36 mit einer stirnseitigen Schrägfläche 54 an. Das Rohrstück 35 und die Hubbegrenzung 36 sind im Bereich der Umfangskante 52/Schrägfläche 54 thermisch gefügt, so daß eine Ringnaht 70 ausgebildet wird, entlang der die Hubbegrenzung 36 druckfest und druckdicht mit dem Rohrstück 35 verbunden ist. Durch das Anliegen der Umfangskante 52 an der Schrägfläche 54 entsteht ein relativ schmaler Kontaktbereich, so daß die für das thermische Fügen erforderliche Energie gezielt eingebracht und die Ringnaht 70 optimal ausgebildet werden kann. Erfindungsgemäß erfolgt das thermische Fügen nach dem Kondesatorentladungsschweißverfahren.

Zur Reduzierung der auf die Ringnaht 70 wirkenden aufnahmeraumseitige Druckbelastungen ist an der Hubbegrenzung 36 stirnseitig im Bereich der Ringnaht 70 eine axiale Ausdrehung 50 ausgebildet (Figur 3). Durch diese Ausdrehung 50 sind die mechanischen Spannungen im Bereich der Ringnaht 70 erheblich verringerbar, so daß die Riß- und Bruchanfälligkeit der Ringnaht positiv gesenkt sind.

Vorzugsweise ist ein vom Aufnahmeraum 37 abgewandter Mittelbereich 72 der Hubbegrenzung 36 radial zurückgesetzt, so daß zur Aufnahme einer isolierenden Führungshülse 56 eine vom Schweißbereich axial beabstandete Ringausnehmung 86 geschaffen ist.

Die Wegmesseinrichtung 60 weist einen an der dem Aufnahmeraum 37 abgewandten Stirnfläche 80 der Hubbegrenzung 36 radial zurückgesetzten dornartigen Körper 80 mit einer sich von dem Aufnahmeraum 37 durch die Hubbegrenzung 36 erstreckenden Sacklochbohrung 82 auf. In dieser Sacklochbohrung 82 ist der verlängerte freie Endabschnitt 84 des Stößels 39 aufgenommen, der in Abhängigkeit von der Schieberposition bzw. Ankerposition in die Sacklochbohrung 82 unterschiedlich tief eintaucht.

Vorzugsweise erfolgt die Wegmessung des Schiebers (nicht dargestellt) nach induktivem Prinzip, wobei der freie Endabschnitt 84 des Stößels 39 von einem ringartigen ferritischen Kern 88 umgriffen ist, so daß mittels einer Differentialdrossel oder eines Differentialtransformators eine wegabhängige induzierte Spannung meßbar ist.

Die Anmelderin hält es sich vor, einen nebengeordneten Patentanspruch auf die erfindungsgemäße thermische Verfügung der Hubbegrenzung mit einem Rohrstück durch Anwendung eines Kondensatorentladungsschweißverfahrens zu richten.

Bei einem bevorzugten Verfahren zur Herstellung des erfindungsgemäßen Druckrohrs wird in einer Aufnahmevorrichtung zuerst das Rohrstück 35 mit dem Zwischenstück 33 und dem Polstück 31 verbunden. Vorzugsweise erfolgt dies über ein Kondensatorentladungsschweißverfahren. Anschließend wird in dem Aufnahmeraum 37 der Anker, vorzugsweise mit dem Stößel 39, nebst der Feder 58 positioniert. Die Hubbegrenzung 36 wird in das Rohrstück eingesetzt, bis es mit seiner Umfangskante 52 an der Schrägfläche 54 des Rohstücks 35 anliegt. In einem letzten Arbeitsschritt wird nun die Hubbegrenzung im Bereich der Umfangskante 52 und der Schrägfläche 54 unter Ausbildung einer Ringnaht 70 erfindungsgemäß mittels Kondensatorentladungsschweißen thermisch verfügt.

### Bezugszeichenliste

- 1 -: Wegeventil
- 2: Hubmagnetanordnung
- 3: Hubmagnetanordnung
- 4: Ventilgehäuse
- 5: Steuerschieber
- 6: Ventilanschluß
- 7: Ventilanschluß
- 8: Rückstelleinrichtung
- 9: Rückstelleinrichtung
- 10: Druckrohr
- 11: Magnetspule
- 12: Spulengehäuse
- 13: Polstück
- 14: Zwischenstück
- 15: Rohrstück
- 16: Lauffläche
- 17: Aufnahmeraum
- 18: Anker
- 19: Hubbegrenzung
- 21: Handnotbolzen
- 22: Stößel
- 29: Zentralgewinde
- 30: Druckrohr
- 31: Polstück
- 32: Zentralgewinde
- 33: Zwischenstück
- 34: Bauteil
- 35: Rohrstück
- 36: Hubbegrenzung
- 37: Aufnahmeraum
- 38: Anker
- 39: Stößel
- 40: Handnotbolzen
- 41: Bohrung
- 42: O-Ring
- 43: Lauffläche
- 44: Ringnut
- 45: Ringnut
- 46: Ringwulst
- 47: Ringwulst
- 50: Ausdrehung
- 51: Unterraum
- 52: Umfangskante
- 53: Unterraum
- 54: Schrägfläche
- 55: Anlagering
- 56: Führungshülse
- 58: Feder
- 60: Wegmesseinrichtung
- 62: Stirnfläche
- 64: Stirnfläche
- 66: Stirnfläche
- 68: Stirnfläche.
- 70: Ringnaht
- 72: Mittelbereich
- 74: Vertiefung
- 76: Vertiefung
- 78: Stirnfläche
- 80: dornartiger Körper
- 82: Sacklochbohrung
- 84: freie Endabschnitt
- 86: Ringausnehumg
- 88: Ferritischer Kern
- 94: Durchgangsbohrung

## Patentansprüche

1. Verfahren zur Herstellung eines Druckrohres eines Hubmagneten für ein hydraulisches Ventil, welches Druckrohr ein Polstück (31), ein unmagnetisches Zwischenstück (33), ein Rohrstück (35) und eine Hubbegrenzung (36) aufweist und mit einem Aufnahmeraum (37) für einen mit einem Stößel (39) zusammenwirkenden Anker (38) ausgebildet ist, wobei das unmagnetische Zwischenstück (33) an seinen Stirnseiten mit dem Polstück (31) und dem Rohrstück (35) derart thermisch verfügt wird, daß nach dem Verfügen eine Lauffläche (43) für den Anker (38) ausgebildet ist, **dadurch gekennzeichnet, daß** der Anker (38) vor dem Verfügen des Polstücks (31), des Zwischenstücks (33) und des Rohrstücks (35) in den Aufnahmeraum (37) eingebracht wird.

2. Verfahren nach Anspruch 1, **dadurch gekennzeichnet, daß** das Zwischenstück (33) mit dem Polstück (31) und dem Rohrstück (35) verschweißt wird.

3. Verfahren nach Anspruch 2, **dadurch gekennzeichnet, daß** ein Kondensatorentladungsschweißverfahren eingesetzt wird.

4. Verfahren nach einem der Ansprüche 1 bis 3, **dadurch gekennzeichnet, daß** das Polstück (31), das Zwischenstück (33) und das Rohrstück (35) beim verfügen vertikal ausgerichtet sind.

5. Verfahren nach einem der Ansprüche 1 bis 4 **dadurch gekennzeichnet, daß** die Hubbegrenzung (36) mit dem Rohrstück (35) thermisch verfügt ist.

6. Verfahren nach einem der Ansprüche 1 bis 4, **dadurch gekennzeichnet, daß** die Hubbegrenzung (36) und das Rohrstück (35) einstückig gefertigt werden.

## Claims

1. A method for producing a pressure pipe of a stroking solenoid for a hydraulic valve, which pressure pipe has a pole piece (31), a nonmagnetic intermediary piece (33), a tubular piece (35), and a stroke limiter (36), and has a receptacle (37) for an armature (38) that cooperates with a tappet (39), **characterized in that** the nonmagnetic intermediary piece (33) is thermally joined at its ends to the pole piece (31) and the tubular piece (35) in such a way that after the joining, a sliding surface (43) for the armature (38) is formed, **characterized by** the fact that the armature (38) is introduced into the receptacle region (37) before the pole piece (31), the intermediate piece (33), and the tubular piece (35) are joined to one another.

2. The method according to claim 1, **characterized in that** the intermediate piece (33) is welded to the pole piece (31) and the tubular piece (35).

3. The method according to claim 2, **characterized in that** a capacitor discharge welding process is used.

4. The method according to any of claims 1 to 3, **characterized in that** the pole piece (31), the intermediate piece (33), and the tubular piece (35) are vertically aligned during the joining process.

5. The method according to any of claims 1 to 4, **characterized in that** the stroke limiter (36) is thermally joined to the tubular piece (35).

6. The method according to any of claims I to 4, **characterized in that** the stroke limiter (36) and the tubular piece (35) are made of one piece.

## Revendications

1. Procédé pour la fabrication d'un tube sous pression pour un électro-aimant de course d'une valve hydraulique, ce tube sous pression présentant un élément (31) de polarité, un élément (33) intermédiaire non magnétique, un élément (35) tubulaire et une limitation (36) de course et étant doté d'une cavité (37) de réception d'un induit (38), qui agit conjointement avec un coulisseau (39), cependant que l'élément (33) intermédiaire non magnétique au niveau de ses faces est assemblé avec l'élément (31) de polarité et l'élément (35) tubulaire par voie thermique de telle façon, qu'après l'assemblage est constituée une surface (43) de déplacement de l'induit (38), **caractérisé en ce que** l'induit (38) est inséré dans la cavité (37) de réception avant que l'élément (31) de polarité, l'élément (33) intermédiaire et l'élément (35) tubulaire ne soient assemblés.

2. Procédé selon la revendication n° 1, **caractérisé en ce que** l'élément (33) intermédiaire est soudé à l'élément (31) de polarité et à l'élément (35) tubulaire.

3. Procédé selon la revendication n° 2, **caractérisé en ce qu'**un procédé de soudure à décharge à condensateur est employé.

4. Procédé selon une des revendications n° 1 à 3, **caractérisé en ce que** l'élément (31) de polarité, l'élément (33) intermédiaire et l'élément (35) tubulaire sont orientés verticalement au moment de l'assemblage.

5. Procédé selon une des revendications n° 1 à 4, **caractérisé en ce que** la limitation (36) de course est assemblée par voie thermique avec l'élément (35) tubulaire.

6. Procédé selon une des revendications n° 1 à 4, **caractérisé en ce que** la limitation (36) de course et l'élément (35) tubulaire sont fabriqués d'une seule pièce.
